Europäisches Patentamt

European Patent Office

Office européen des brevets

(19)

(11) **EP 0 422 479 B1**

(12) **EUROPÄISCHE PATENTSCHRIFT**

(45) Veröffentlichungstag und Bekanntmachung des Hinweises auf die Patenterteilung:
**18.12.1996  Patentblatt 1996/51**

(51) Int Cl.$^6$: **G01S 13/28**

(21) Anmeldenummer: **90118842.5**

(22) Anmeldetag: **02.10.1990**

(54) **Anordnung zur Impulskompression**

Pulse compression apparatus

Appareil de compression d'impulsions

(84) Benannte Vertragsstaaten:
**DE FR GB**

(30) Priorität: **07.10.1989  DE 3933574**

(43) Veröffentlichungstag der Anmeldung:
**17.04.1991  Patentblatt 1991/16**

(73) Patentinhaber: **Daimler-Benz Aerospace Aktiengesellschaft**
**81663 München (DE)**

(72) Erfinder: **Borchert, Wolfgang, Dipl.-Phys.**
**W-7900 Ulm (DE)**

(74) Vertreter: **Schulze, Harald Rudolf, Dipl.-Ing. et al**
**Daimler-Benz Aerospace AG**
**Patentabteilung**
**Sedanstrasse 10**
**89077 Ulm (DE)**

(56) Entgegenhaltungen:
- **IEEE TRANSACTIONS ON AEROSPACE AND ELECTRONICS SYSTEMS Bd. AES20, Nr. 2, Februar 1984, NEW YORK , NY , USA Seiten 141 - 157; R. A. BEDNAR , R. M. SMITH: 'Ambiguity Functions for Quadratic Phase Coded Pulse Trains'**
- **NTZ ARCHIV Bd. 10, Nr. 5, Mai 1988, BERLIN Seiten 109 - 130; H. ROHLING , W. BORCHERT: 'Zum Mismatched Filter Entwurf fuer periodische binaerphasencodierte Signale'**
- **IEEE TRANSACTIONS ON ELECTROMAGNETICAL COMPATIBILITY Bd. EMC14, Nr. 3, August 1972,NEW YORK,NY,USA Seiten 85-91; S.A.COHEN: 'Cross Ambiguity Function for a Linear FM Pulse Compression Radar'**
- **NTZ ARCHIV Bd. 10, Nr. 7, Juli 1988, BERLIN Seiten 171 - 176; H. ROHLING , W. BORCHERT: 'Neues Pulsdoppler Radar'**

**Beschreibung**

Die Erfindung geht aus von einer Anordnung zur Impulskompression nach dem Oberbegriff des Patentanspruchs 1. Eine derartige Anordnung ist beispielsweise aus DE 38 11 282 A1 und in Verbindung mit einem Pulsdopplerradar aus der DE 38 11 283 A1 bekannt. Die bekannten Anordnungen zeigen auf, daß für periodische Impulsfolgen, d.h. codierten Impulsfolgen eines periodisch wiederholten Codewortes für beliebige Periodenlängen mindestens ein Codewort und ein Korrelator gleicher Länge wie das Codewort derart existieren., daß die periodische Kreuzkorrelationsfunktion PKKF aus periodischer Impulsfolge und Korrelator nur im Abstand einer Periodenlänge auftretende Hauptwerte aufweist, während alle Nebenwerte der PKKF verschwinden. Mit periodischen Folgen dieser Eigenschaft kann auf vorteilhafte Weise eine Codierung von Radarsignalen und nach Impulskompression von Echosignalen eine Zielentfernungsauswertung auch bei hoher Pulswiederholfrequenz (HPRF) durchgeführt werden, wobei besonders vorteilhaft eine binäre Phasencodierung ist.

Wesentlich für die bekannten Anordnungen ist, daß das dem periodisch wiederholten Codewort über die diskrete Fourier-Transformation zugeordnete Betragsspektrum keine Nullstellen aufweist. Es lassen sich für beliebige Periodenlängen, d.h. beliebige Anzahl N von Codestellen des Codewortes hohe relative Integrationsgewinne der Impulskompression erzielen. Für weitere Einzelheiten zu den periodischen Folgen und deren Impulskompressionen wird auf den genannten Stand der Technik verwiesen.

Es hat sich allerdings gezeigt, daß die Impulskompression sehr empfindlich gegen Abweichungen der zu komprimierenden Signale von der ungestörten Folge reagiert. Insbesondere steigen z.B. bei einer Dopplerverschiebung in den Radarechosignalen die Nebenwerte der periodischen Kreuzkorrelationsfunktion schnell an. "IEEE Transactions on Aerospace and Electronic Systems", Bd. AES-20, Nr. 2, März 1984, Seiten 141 bis 157, sind verschiedene Ambiguity-Funktionen für quadratisch phasencodierte Pulsfolgen beschrieben. Dabei wird die Phase quadratisch von Puls zu Puls geändert. Solche Pulsfolgen sind verwendbar für ein Pulsdopplerradar mit einem Matchedfilter.

Der vorliegenden Erfindung liegt daher die Aufgabe zugrunde, eine Anordnung zur Impulskompression der im Oberbegriff des Patentanspruchs 1 genannten Art anzugeben, die unempfindlicher gegen Dopplerverschiebungen ist und insbesondere ein besseres Haupt-Nebenwert-Verhältnis über einen größeren Dopplerfrequenzbereich gewährleistet.

Die Erfindung ist im Patentanspruch 1 beschrieben. Die Unteransprüche enthalten vorteilhafte Ausgestaltungen der Erfindung.

Die Erfindung ist nachfolgend anhand von Beispielen unter Bezugnahme auf die Abbildungen noch eingehend veranschaulicht. Dabei zeigt

FIG. 1          einen Ausschnitt aus einer Binärfolge

FIG. 2          das zugehörige DFT-Spektrum

FIG.            3 die Impulsantwort eines einfachen Mismatched-Filters zur Folge nach FIG. 1

FIG. 4 und 5    Realteil und Imaginärteils des zu FIG. 3 gehörenden spekralen Übertragungsfunktion

FIG. 6          Pegelverhältnisse von Hauptwert zu maximalem Nebenwert der periodischen Kreuzkorrelationsfunktion für verschiedene Fensterfunktionen in Abhängigkeit von der relativen Dopplerverschiebung.

Zugrunde gelegt sei ein Pulsdopplerradar mit einer nach einer periodischen Binärfolge binär phasencodierten Sende-Pulsfolge wie beispielsweise aus dem Stand der Technik nach DE 38 11 283 bekannt. Wird das Empfangssignal eines Pulsdopplerradars mit einer solchen Interpulscodierung nach zweikanaliger Abmischung (Quadraturumsetzung) in den Videobereich und vorteilhafterweise nach Filterung der Rechteckimpulse in einem Impuls-Matched-Filter im Impulsabstand Tp abgetastet, erhält man eine komplexe Abtastwertfolge, deren Vorliegen für die folgenden Ausführungen vorausgesetzt wird, für die weitere Verarbeitung.

Ausgehend von einer Impulsfolge der Länge N mit den Codestellen $c_i$ des periodisch wiederholten Codeworts $\underline{c}$ ergibt sich durch die periodische Wiederholung ein Signal mit den im Takt des Impulsabstands Tp aufeinanderfolgenden Signalwerten

$$c(i)=c(i \bmod (N)) \quad i=0,1,2.. \tag{1}$$

Zu einem gegebenen Codewort $\underline{c}$ läßt sich unter den in der DE 38 11 282 angegebenen Voraussetzungen eindeutig ein Korrelator mit Korrelatorgewichten g(n), n=0,1...N-1 so bestimmen, daß für die periodische Kreuzkorrelation PKKF der periodischen Binärfolge s mit dem Korrelator C gilt

$$\text{PKKF} \ (m) = \sum_{n=0}^{N-1} c(n+m) \cdot g(n) \ = \ \begin{cases} 1 \ \text{für} \quad m = 0 \ \text{mod}\,(N) \\ 0 \ \text{sonst} \end{cases} \tag{2}$$

Äquivalent ist die Beschreibung der Impulskompression der periodischen Binärfolge mittels eines Kompressionsfilters, wobei bekannterweise einem Korrelator mit Gewichten g(n) ein Filter mit zeitinversen Filterkoeffizienten entspricht. Im folgenden sind die äquivalenten Darstellungen je nach Zweckdienlichkeit herangezogen.

Die aus dem Radarempfangssignal gewonnene komplexe Abtastfolge im Videosignal läßt sich beschreiben mit

$$s(n) = c(n) \cdot e^{j2\pi fn/N} \ , \ n = o,1,.. \tag{3}$$

Dabei ist f ein auf die Dauer N.Tp=T der codierten Folge c(n) normierter Frequenzparameter, im Beispielsfall gleich dem Produkt aus Signalperiode und Dopplerfrequenz.

Ersetzt man in Gleichung (2) die ursprüngliche Binärfolge s(n) durch ihre dopplerverschobene Version s(n), so ergibt sich eine zweidimensionale PKKF, oder die zeitdiskrete, periodische Kreuzambiguity-Funktion $\chi(m,f)$ der Folge c(n) und des Korrelators g(n) zu

$$\chi(m,f) = \sum_{n=0}^{N-1} g(n) \cdot c(n+m) \cdot e^{j2\pi f(n+m)/N} \tag{4}$$

für m=0,1,2,... und c(n+m)=c((n+m)mod(N)).

Daraus kann das Pegelverhältnis von Hauptwert und maximalem Nebenwert für verschiedene f, also verschiedene Dopplerfrequenzen ermittelt werden. Es ergibt sich, daß bereits für geringe Dopplerverschiebungen im Empfangssignal die Nebenwerte stark zunehmen. Beispielsweise reduziert sich der Haupt-Nebenwert-Abstand bei einem 13-er Barkercode als Codewort für f=0,05 bereits auf nur noch 24dB. Der Dopplerfrequenzbereich, in welchem $\chi(f,m)$ noch ein brauchbares Haupt-Nebenwert-Verhältnis aufweist, reicht in der Praxis im Regelfall nicht aus, da z.B. für typische Betriebsparameter eines Bordradars im x-Band mit PRF=200 kHz und einer maximalen Zielannäherungsgeschwindigkeit von 1000 m/s f ungefähr den Wert 0,35 erreicht und dabei ein vorgegebener Haupt-Nebenwert-Abstand nicht unterschritten werden sollte, damit die Nebenwerte starker Echos nicht die Hauptwerte schwacher Ziele maskieren.

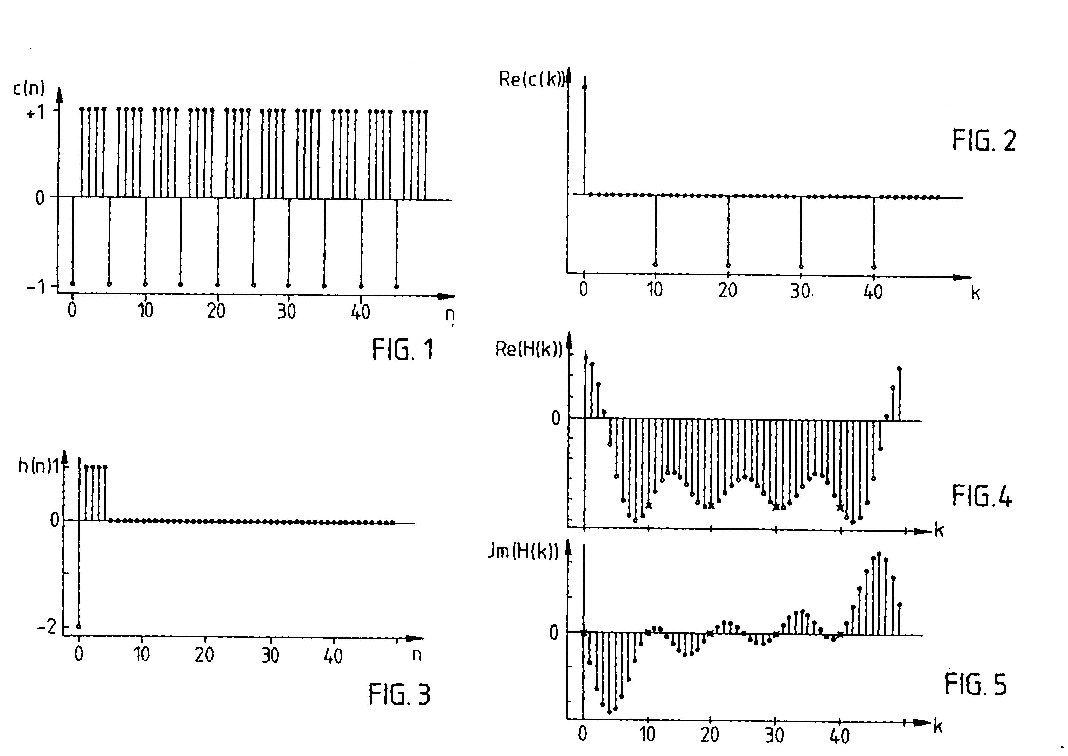

Zur Veranschaulichung der mit der Erfindung erzielten Verbesserung sei eine Binärfolge aus einem periodisch wiederholten Codewort mit N=5 Codestellen c(n)= -1, 1, 1, 1, 1, gewählt und ein sich über Z=10 Perioden der periodischen Binärfolge erstreckender Signalausschnitt betrachtet. Das aus Z.N=50 im Zeitabstand Tp gewonnenen binären Abtastwerten gebildete Zeitsignal zeigt FIG. 1. Das zugehörige DFT-Spektrum C(k) in FIG. 2 ist im definiert für diskrete Frequenzen im Abstand von 1/(50.Tp), besitzt aber von Null verschiedene Werte nur bei Vielfachen von k=1/(5Tp) entsprechend der eigentlichen Periode T=5Tp des Zeitsignals. Der Imaginärteil des DFT-Spektrums C(k) ist im Beispielsfall gleich Null.

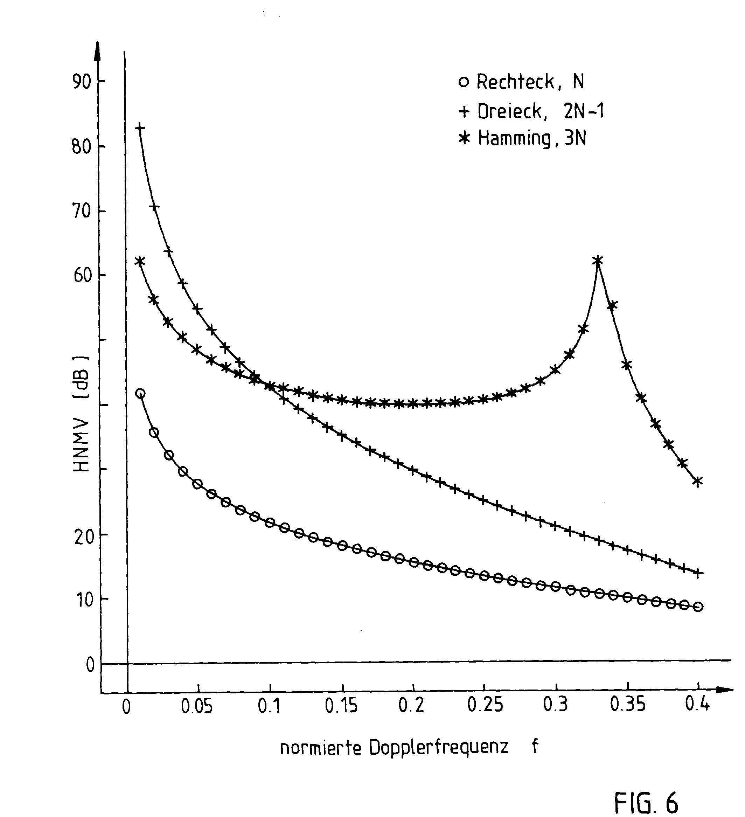

Zur Erzielung einer perfekten, d.h. nebenwertfreien PKKF ist für die in FIG. 1 skizzierte Folge ein Mismatched-Filter mit einer Impulsantwort h(n)=-2, 1, 1, 1, 1 erforderlich. Wird wie beim Stand der Technik die Filterlänge gleich einer Signalperiode gewählt, so sind für eine DFT derselben Länge wie in FIG. 1, 2 die übrigen Stützstellen gleich Null zu setzen, wie in FIG. 3 skizziert. Die Durchführung der DFT führt für die Impulsantwort nach FIG. 3 zu einer frequenzdiskreten, periodischen Übertragungsfunktion H(k), deren Realteil in FIG. 4 und deren Imaginärteil in FIG. 5 dargestellt sind.

Die Impulskompression der Abtastwertfolge im Kompressionsfilter entspricht im Spektralbereich einer Multiplikation der zugeordneten Spektren. Im skizzierten Beispielsfall führt die Multiplikation der Spektren beim Imaginärteil zum Verschwinden aller Werte, da die von Null verschiedenen Spektralwerte von C(k) mit den Nullstellen des Imaginärteils von H(k) zusammenfallen. Für den Realteil des Produktspektrums ergibt sich, wie leicht nachzuvollziehen ist, eine Folge von 5 positiven gleichgroßen Spektralwerten im Abstand 1/(5.Tp). Die Rücktransformation in den Zeitbereich führt zu der bekannten PKKF mit Hauptwerten im Abstand 5.Tp und verschwindenden Nebenwerten. Die soweit beschriebene Situation gilt für den Fall nicht dopplerverschobener Signale.

Wird nun das Signal nach FIG. 1 mit einer komplexen Schwingung $e^{j2\pi fn/N}$ multipliziert und ist beispielsweise f=0,1, dann kommt auf die 10 Perioden der Folge nach FIG. 1 gerade eine Schwingungsdauer der komplexen Schwingung.

Für das Spektrum C(k) in FIG. 2 bedeutet dies die Verschiebung um eine Stützstelle nach rechts. Das Kompressionsfilter und somit auch dessen Übertragungsfunktion H(k) sind hiervon unberührt. Von Bedeutung ist die Verschiebung des Spektrums der Signalfolge aber für das Produktspektrum aus C(k) und H(k), da nunmehr die Folge der Spektralwerte des Produktspektrums nicht mehr betragsgleich ist. Dies entspricht im Zeitbereich dem Auftreten von Nebenwerten in der Kreuzambiguity-Funktion $\chi(f,m)$.

Anhand dieser Darstellung ist auch anschaulich die Wirkungsweise der Erfindung erläuterbar. Diese beruht wesentlich darauf, daß

a) die Übertragungsfunktion des eingesetzten Kompressionsfilters (bzw. das DFT-Spektrum des Korrelators) an den von Null verschiedenen Stellen des Spektrums C(k)(FIG. 2) der nicht dopplerverschobenen Binärfolge Werte aufweist, die ohne Dopplerverschiebung zu einem konstanten Produktspektrum an den Stellen i/N.Tp entsteht, i=0, 1,..N-1

b) und die Übertragungsfunktion in der Umgebung dieser Stellen Werte aufweist, die bei Dopplerverschiebung zu einem zwar verschobenen aber annähernd betragskonstanten Produktspektrum führen.

Dies wird erzielt durch eine Verlängerung des Korrelators (bzw. des Kompressionsfilters) durch periodische Wiederholung der Korrelatorgewichte und Multiplikation der periodischen Folge von Korrelatorgewichten mit einer nicht rechteckförmigen Fensterfunktion. Die Länge der Fensterfunktion ist so zu wählen, daß Nullstellen oder Minima des Spektrums der Fensterfunktion an die Stellen i/NTp, i=1, 2,...N-1 zu liegen kommen.

Dies ist beispielsweise gegeben durch ein Dreieckfenster der Länge 2N-1 (nicht verschwindende Werte). Für die als Beispielsfall gewählte Binärfolge entsteht aus der periodisch fortgesetzten Folge der Korrelatorgewichte -2, 1, 1, 1, 1,-2, 1, 1, 1, 1,-2, 1... mit einer Dreieckfunktion 1, 2, 3, 4, 5, 4, 3, 2, 1 ein verlängerter Korrelator mit den Gewichten -2, 2, 3, 4, 5, -8, 3, 2, 1 der für f=0,05 noch einen Haupt-Nebenwert-Abstand von rund 52dB aufweist, während der nicht gefensterte Korrelator gleicher Länge wie die Signalperiode bei f=0,05 lediglich noch zu einem Haupt-Nebenwert-Abstand von ca. 22dB führt.

Hanning- und Hamming-Fenster haben zunächst mit einem Dreieckfenster gleicher Länge gemeinsame Nullstellen im Spektrum, darüber hinaus aber noch weitere dazwischenliegende Minima. Durch Verlängerung dieser Fensterfunktion auf eine Länge von 3 N können besonders vorteilhafte Korrelatoren (bzw. Filter) gebildet werden, bei welchen die Impulskompression für relativ weite, in der Praxis relevante Dopplerverschiebungsbereiche nur geringe Störbeiträge liefert. Diese und weitere Fensterfunktionen als solche sind beispielsweise beschrieben in Oppenheim/Schafer: Digital Signal Processing, 1975, Abschnitt "Digital Filter Design Techniques".

In FIG. 6 sind zum Vergleich die Auswirkungen der Korrelatorfensterung auf den Haupt-Nebenwert-Abstand für verschiedene Fenstertypen und -längen am Beispiel des 13-er Barkercodes (N=13) als Codewort skizziert. Während das Dreieck-Fenster der Länge 2N-1=25 (nicht verschwindende Werte) vor allem bei geringen Dopplerverschiebungen f erhebliche Verbesserungen gegenüber dem ungefensterten Korrelator der Länge=13 erbringt, erweist sich das Hamming-Fenster der Länge 3N=39 über einen weiten Dopplerfrequenzbereich als unempfindlich.

Die auf den ersten Blick wegen des erhöhten Aufwands nachteilige und hinsichtlich des Signal-Rausch-Verhältnisses eher wirkungslose Maßnahme des verlängerten Korrelators erweist sich in Verbindung mit der Fensterung als Möglichkeit zur erheblichen Verbesserung der Einsatzfähigkeit der periodischen Binärfolgen auch bei Anwendungen mit nicht vernachlässigbarer Dopplerverschiebung in den zu komprimierenden Signalen. Die Anwendung ist nicht auf pulscodierte Radarsignale und auch nicht auf binäre Phasencodierung beschränkt.

**Patentansprüche**

1. Anordnung zur Impulskompression von Signalen mit einer periodisch wiederholten codierten Impulsfolge mit N Codestellen innerhalb einer Periodenlänge, wobei für die Impulsfolge ein Korrelator mit gleicher Periodenlänge und mit N Korrelatorgewichten vorhanden ist, so daß in der periodischen Kreuzkorrelationsfunktion des Korrelators mit der Impulsfolge alle Nebenwerte verschwinden, <u>dadurch gekennzeichnet</u>,

- daß ein modifizierter Korrelator vorgesehen ist, der länger ist als eine Periodenlänge,

- daß der modifizierte Korrelator Gewichte besitzt, die gebildet werden durch Wichtung einer periodisch fortgesetzten Folge der Korrelatorgewichte mit einer Fensterfunktion und

- daß die Fensterfunktion ein über die diskrete Fouriertransformation zugeordnetes Spektrum besitzt, das Nullstellen aufweist, bei dem Wert 1/T und ganzzahligen Vielfachen davon, wobei T die Zeitdauer einer Perioden-

**EP 0 422 479 B1**

länge bedeutet.

**2.** Anordnung nach Anspruch 1, dadurch gekennzeichnet, daß die Fensterfunktion ein Dreieckfenster der Länge 2N-1 Codestellen ist.

**3.** Anordnung nach Anspruch 1, dadurch gekennzeichnet, daß die Fensterfunktion ein Hamming-Fenster der Länge 3N Codestellen ist.

**Claims**

**1.** Arrangement for pulse compression of signals with a periodically repeated coded pulse train with N code positions within a period length, wherein a correlator with the same period length and with N correlator weightings is present for the pulse train so that all spurious values disappear in the periodic cross-correlation function of the correlator with the pulse train, characterised thereby

- that a modified correlator, which is longer than a period length, is provided,
- that the modified correlator possesses weightings which are formed by weighting a periodically continued sequence of the correlator weightings by a window function and
- that the window function has a spectrum which is assigned by way of discrete fourier transformation and has zero positions at the value 1/T and integral multiples thereof, wherein T signifies the time duration of a period length.

**2.** Arrangement according to claim 1, characterised thereby that the window function is a triangular window of the length 2N-1 code positions.

**3.** Arrangement according to claim 1, characterised thereby that the window function is a Hamming window of the length 3N code positions.

**Revendications**

**1.** Dispositif de compression d'impulsions de signaux comportant une suite d'impulsions, répétée périodiquement et codée, avec N positions de code dans une longueur de période, un corrélateur de même longueur de période et à N pondérations de corrélateur étant présent pour la suite d'impulsions, de sorte que dans la fonction périodique d'intercorrélation du corrélateur avec la suite d'impulsions, toutes les valeurs secondaires disparaissent, <u>caractérisé en ce</u>

- qu'un corrélateur modifié est prévu, qui est plus long qu'une longueur de période,
- que le corrélateur modifié possède des pondérations formées par la pondération d'une suite périodiquement poursuivie des pondérations de corrélateur avec une fonction de fenêtre et
- que la fonction de fenêtre possède un spectre, coordonné à travers la transformation de Fourier discrète, qui présente des points zéro à la valeur 1/T et des multiples entiers de cette valeur, où T désigne la durée d'une longueur de période.

**2.** Dispositif selon la revendication 1, caractérisé en ce que la fonction de fenêtre est une fenêtre triangulaire ayant la longueur de 2N-1 positions de code.

**3.** Dispositif selon la revendication 1, caractérisé en ce que la fonction de fenêtre est une fenêtre de Hamming ayant la longueur de 3N positions de code.

5

FIG. 2

FIG. 4

FIG. 5

FIG. 1

FIG. 3

○ Rechteck, N
+ Dreieck, 2N-1
* Hamming, 3N

normierte Dopplerfrequenz f

FIG. 6